# EUROPEAN PATENT APPLICATION

(11) **EP 0 966 081 A1**
(43) Date of publication of application: **22.12.1999**
(21) Application number: 99201958.8
(22) Date of filing: 18.06.1999
(51) Int. Cl.: H02G 1/04

(54) **Device for laying a towing cable for overhead power lines on supporting towers by means of a helicopter and related method**

(30) Priority: 19.06.1998 IT MI981413
(71) Applicant: ABB Sae SpA, 20127 Milano (IT)
(72) Inventor: Taverna, Enzo, 27058 Voghera (PV) (IT); Businello, Giacomo, 27018 Vidigulfo (PV) (IT); Marchese, Germano, 39100 Bolzano (IT); Ravera, Giuseppe, 26065 San Rocco al Porto(LO) (IT)
(74) Representative: Giavarini, Francesco

(57) **Abstract**

A device for laying a towing cable of an overhead power line on supporting towers by means of a helicopter, comprising:
a bypass cable, an intermediate portion of which is inserted in the race of a pulley which is fixed to a corresponding supporting tower and is connected at its leading and trailing ends to male and female coupling means respectively;
engagement/release means, which are connected to the towing cable, are adapted to facilitate its coupling to the bypass cable and act so as to maintain the continuity of the connection between the helicopter and the towing cable;
containing means, which are fixed to the supporting tower with a substantially vertical axis and are meant to guide the engagement/release means and support the coupling means of the bypass cable.

## Description

The present invention relates to a device and a method for laying a towing cable of overhead power lines on supporting towers by means of a helicopter.

More particularly, the invention relates to a device and a method which facilitate the maneuvers of the helicopter, allowing simpler and faster steps for laying the towing cable along the towers of a power line.

As it is known, a high-voltage power line can be stringed through supporting towers, whose height from the ground can vary from 10-12 meters to a few tens of meters, by using a helicopter. For this purpose, a cable for towing the conductor to be stringed is fastened to the helicopter by means of a suitable coupling device; after performing these connections, the helicopter pilot flies proximate to a tower of the line and, by means of appropriate maneuvers, facilitates the insertion of the cable in a pulley which is fixed to the structure of the tower. In particular, the pulleys normally used in the stringing of overhead power lines have an oblique lateral arm which protrudes toward the outside of the tower and on which the towing cable is rested; said arm, thanks to its shape and position, facilitates the sliding and correct insertion of the cable in the race of the pulley.

After this operation has been accomplished, the pilot can fly toward the subsequent towers of the line, laying the cable and repeating the above-described operations for all the towers of the line. In these steps, the cable towed by the helicopter is supported and guided by the pulleys on which it has been previously inserted.

This method is relatively easy to perform whenever the structure of the tower does not hinder the maneuvers of the helicopter in any way, such as for example in the stringing of power lines on towers of the frustum of pyramid type in which the pulleys can be fixed to the tips of brackets which protrude outside the body of said tower.

However, when using some kinds of tower, for example of the H-shaped or delta-shaped type widely used in the backbone of the ENEL (National Electrical Authority of Italy) distribution grid, the above-described method entails several drawbacks. In particular, said method is fully inapplicable for laying the cable related to the central phase of the power line because the corresponding pulleys are suspended in a central position from the horizontal portion of the structure that connects the lateral parts of the tower. This portion of the structure, being arranged transversely to the laying direction, prevents the helicopter pilot from inserting the towing cable in the corresponding pulley and from continuing the laying operation while maintaining the continuity of the connection between the cable and the helicopter. Accordingly, it is necessary to bypass the supporting tower in some way.

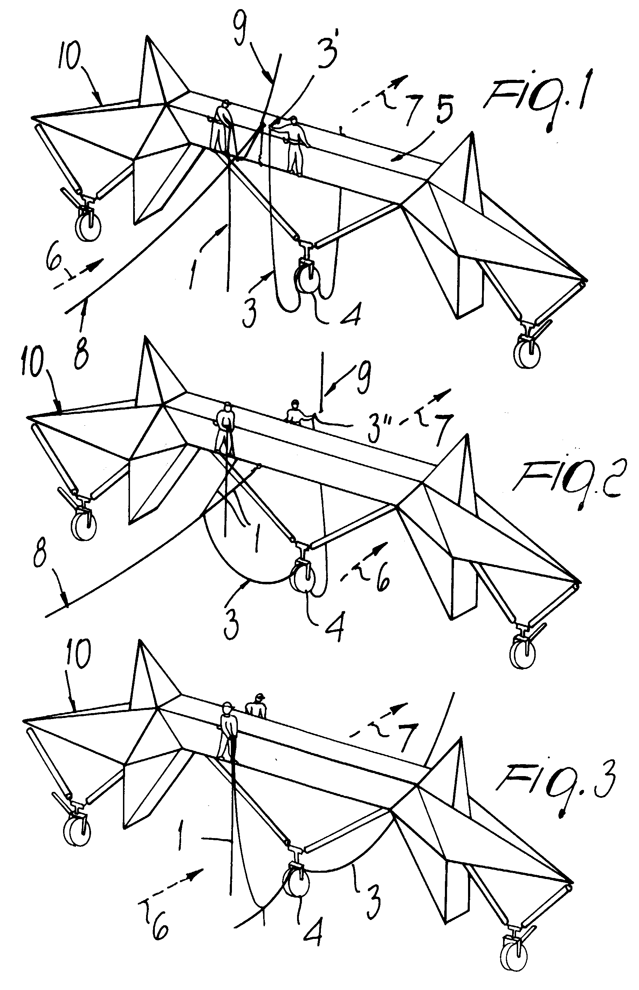

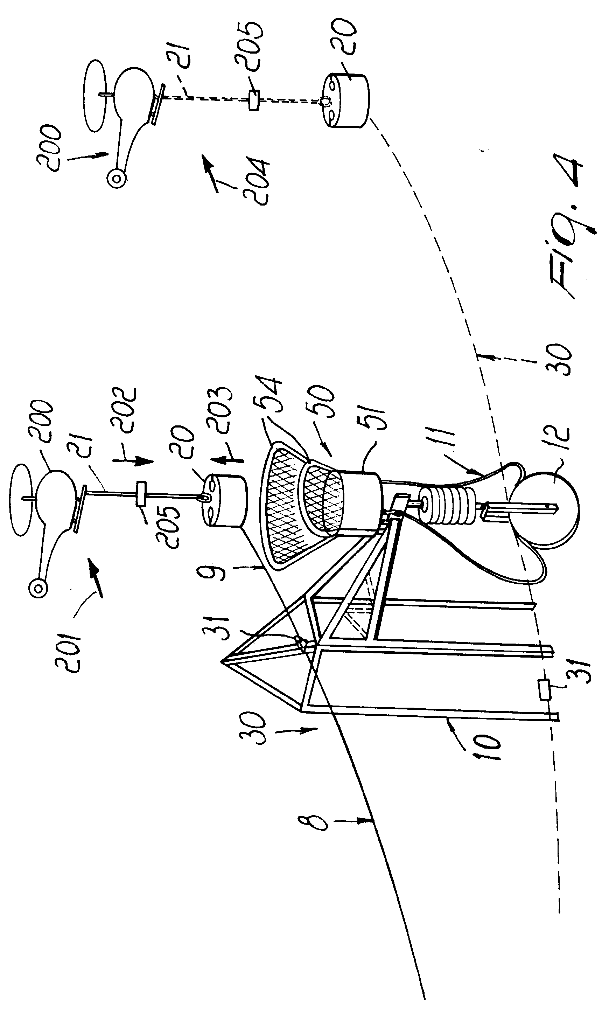

In the current state of the art and as shown schematically in Figures 1, 2 and 3, one of the most widely used solutions to obviate this drawback is the use, for each tower 10, of a bypass cable 3 which is inserted beforehand in the race of a pulley 4 and the ends of which are coupled to the cross-frame 5 of the tower on the arrival side 6 and on the re-starting side 7 of the line respectively. Two operators are also employed on each tower; when the helicopter (not shown in the figure) arrives, the operators disengage the towing cable 8 from the leader cable 8 suspended from the helicopter and connect it to the end 3 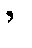 of the bypass cable 3. The helicopter pilot then flies around the pole and hovers so as to allow one of the two operators to connect the second end 3'' of the bypass cable 3 to the connection device connected to the leader cable 9. The helicopter can then set off and continue laying the towing cable, which runs through the race of the pulley 4.

Although this solution allows to avoid the above mentioned problems, it is nonetheless troublesome, expensive and dangerous to perform. The need to provide two operators for each tower in fact entails an intensive use of labor, owing to the considerable number of towers of the line: for example approximately twenty supporting towers are required for an eight-kilometer line, so the corresponding labor costs are easy to calculate. Moreover, owing to the particular conditions in which the operators work, i.e., at great heights above the ground and possibly in adverse weather conditions, for example in the presence of strong gusts of wind, it is necessary to adopt suitable safety devices for each operator as well as a system of cables 1 which allow to bear the traction applied by the towing cable when it is not towed by the helicopter. It should also be observed that the execution times are very long and this considerably affects the hiring costs of the helicopter and the costs of the entire stringing operation.

Another conventional solution is illustrated in US patent 4,278,237, which discloses a device which allows to thread the towing cable through the towers of the line by means of the maneuvers of the helicopter alone and without using personnel on the towers. This solution uses a bypass cable which is inserted beforehand in the race of a pulley fixed to a supporting tower and whose ends are detachably connected to a trough-shaped means which is fixed to the cross-frame of the tower so as to have a longitudinal axis which is horizontal and parallel to the direction in which the line advances. The device also comprises a coupling means which is connected to the towing cable and is suspended from the helicopter and can be separated into two parts, a male one and a female one. In particular, the helicopter deposits said coupling means in the median part of the trough and, by means of suitable maneuvers, makes it slide toward the trailing part thereof until it interacts with an abutment mechanism. This interaction causes the disengagement of the two parts, making the male part fall into a receptacle connected to the bypass cable and consequently disengaging said receptacle from the trough. At this point the helicopter, disengaged from the towing cable, moves forward in order to allow the female part to couple to the other end of the bypass cable. After engaging the bypass cable and thus reestablishing the connection to the towing cable, the helicopter can proceed toward the next tower, repeating each time the above-described operations.

Although this solution allows to thread the towing cable automatically with the helicopter alone and without the aid of labor on the towers, it entails some drawbacks and disadvantages mainly due to the structural complexity of the device provided to bypass the tower, leading to an excessive complexity of the maneuvers that the helicopter is forced to perform. Moreover, it should be observed that in the step between the release of the male part of the coupling means and the mutual engagement of the female part and of the bypass cable the helicopter does not maintain a continuous connection to the towing cable of the line; accordingly, any technical malfunction may cause the loss of the towing cable, making the cable fall to the ground.

The aim of the present invention is to provide a device for laying the towing cable of an overhead power line by means of a helicopter which allows to lay the cable through the supporting towers of the line automatically, without using labor and while continuously maintaining the connection between the helicopter and the cable so as to prevent the loss of said cable.

Within the scope of this aim, an object of the present invention is to provide a device for laying the towing cable of an overhead power line by means of a helicopter which allows to considerably simplify the maneuvers of the helicopter.

A further object of the present invention is to provide a device for laying the towing cable of an overhead power line by means of a helicopter which allows to considerably reduce the laying times and accordingly reduce the hiring costs of the helicopter.

Not the last object of the present invention is to provide a device for laying the towing cable of an overhead power line by means of a helicopter which is highly reliable, relatively easy to provide and at competitive costs.

Thus the present invention relates to a device for laying a towing cable of an overhead power line on supporting towers by means of a helicopter. The device according to the invention is characterized in that it comprises:
a bypass cable, an intermediate portion of which is inserted in the race of a pulley which is fixed to a corresponding supporting tower and is connected at its leading and trailing ends to male and female coupling means respectively;
engagement/release means, which are connected to the towing cable and are adapted to facilitate its coupling to the bypass cable, said engagement/release means acting so as to maintain the continuity of the connection between the helicopter and the towing cable;
containing means, which are fixed to said supporting tower with a substantially vertical axis and are meant to guide the engagement/release means and support said male and female coupling means.

Moreover, the present invention relates to a method for laying a towing cable of an overhead power line on supporting towers by means of a helicopter, carried out using said device. In particular, the method according to the invention comprises the following steps:
a) connecting one end of a towing cable to engagement/release means which are connected to a helicopter;
b) maneuvering the helicopter so as to carry the towing cable to the vicinity of containing means which are fixed beforehand to a supporting tower;
c) inserting, by means of a maneuver of the helicopter, the engagement/release means into said containing means;
d) engaging a first end of a bypass cable, which is inserted beforehand in a pulley which is fixed to the tower and whose ends are detachably connected to the containing means;
e) releasing the end of the towing cable into a receptacle which is connected to a second end of the bypass cable;
f) lifting, by means of the helicopter, the engagement/release means connected to the bypass cable, pulling the cable toward a subsequent tower of the line; and
g) repeating steps from b) to f) for each subsequent tower.

Further characteristics and advantages of the present invention will become apparent from the following detailed description of preferred but not exclusive embodiments of the device according to the invention, illustrated only by way of non-limitative example in the accompanying drawings, wherein:
Figures 1, 2 and 3 are schematic views of successive steps of the laying of the towing cable according to a conventional method;
Figure 4 is a general perspective view of the steps for laying a towing cable by means of the device according to the present invention;
Figure 5 is a schematic side view of the laying device according to the invention;
Figure 6 is a top view of containing means with an associated graduated scale, used in the device according to the invention;
Figure 7 is a detail view of a cylindrical body during the engagement of a bypass cable, in the device according to the invention;
Figure 8 is a top view of the cylindrical body of Figure 7;
Figure 9 is a schematic sectional view of the disengagement of a sphere coupled to a towing cable in the device according to the invention;
Figure 10 is a detail view of the descent of the sphere into a receptacle used in the device according to the invention; and
Figure 11 is a detail view of means for supporting the receptacle used in the device according to the invention.

With reference to the above figures, the device according to the present invention comprises a bypass cable 11 which is adapted to be coupled to a towing cable to be laid along the power line. In the illustrated embodiment and merely by way of example, the towing cable, generally designated by the reference numeral 30, initially comprises two portions, designated by the reference numerals 8 and 9 respectively, which are mutually connected by a conventional connection means 31. The portion 9 is welded, at its free end, to a metallic sphere 9 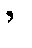 which accordingly constitutes the end of the towing cable and is engaged, in the way described hereinafter, with suitable engagement/release means.

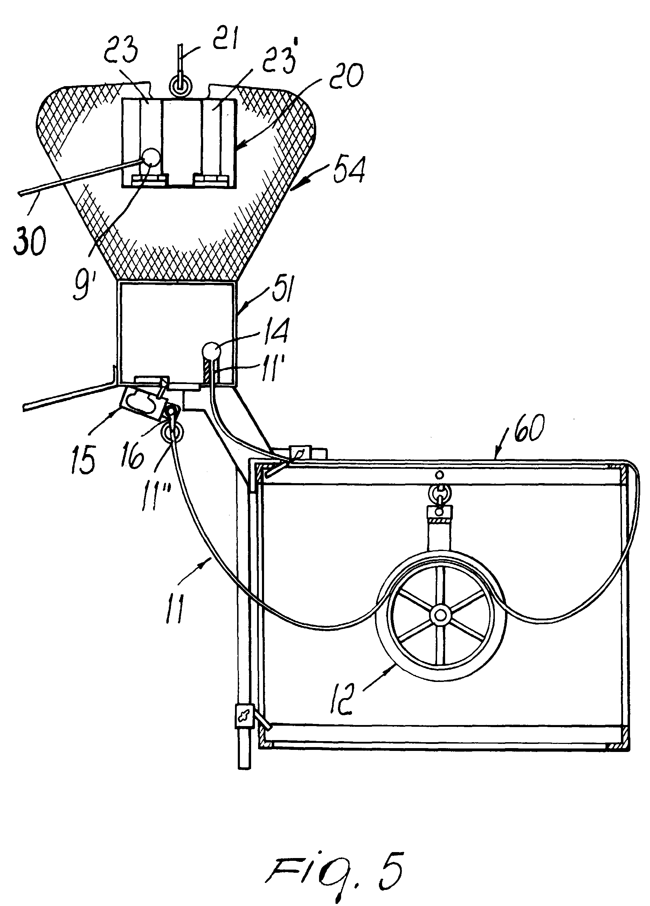

In particular, as shown in Figure 4 and 5, the bypass cable 11 is first inserted, with an intermediate portion, in the race of a pulley 12 which is fixed to a corresponding supporting tower 10. The leading end 11 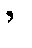 and the trailing end 11'' of the bypass cable are connected to male and female coupling means respectively.

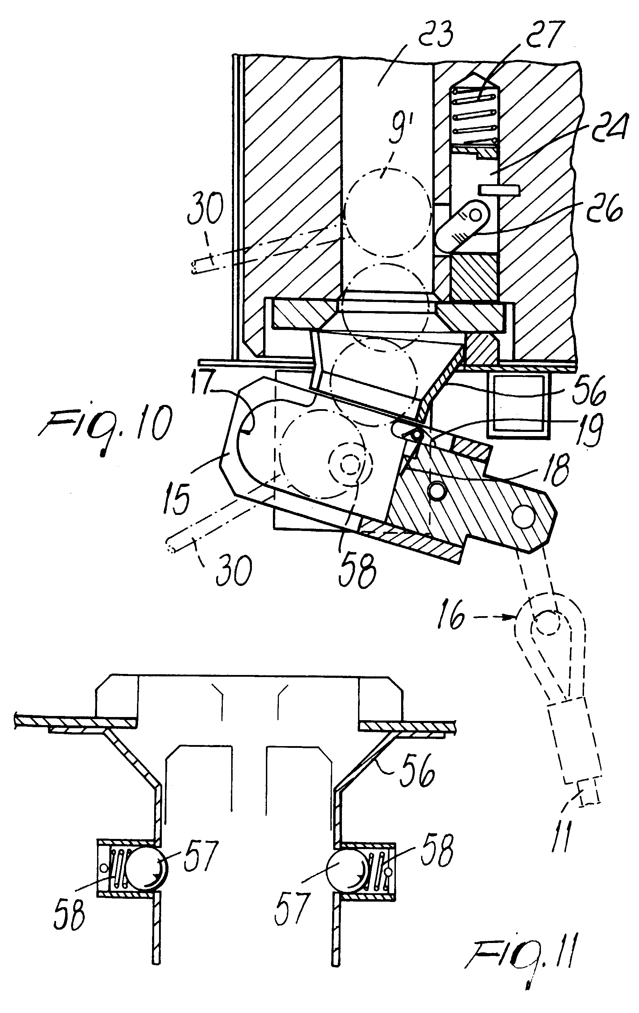

As shown, the male and female coupling means respectively comprise a sphere 14 which is welded to the bypass cable 11 and a receptacle 15 which is connected to the bypass cable 11 by means of an articulated joint 16. As shown in greater detail in Figure 10, the receptacle 15 has a shaped pocket 17 which has an oval cross-section and is suitable to accommodate the sphere 9 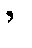 .

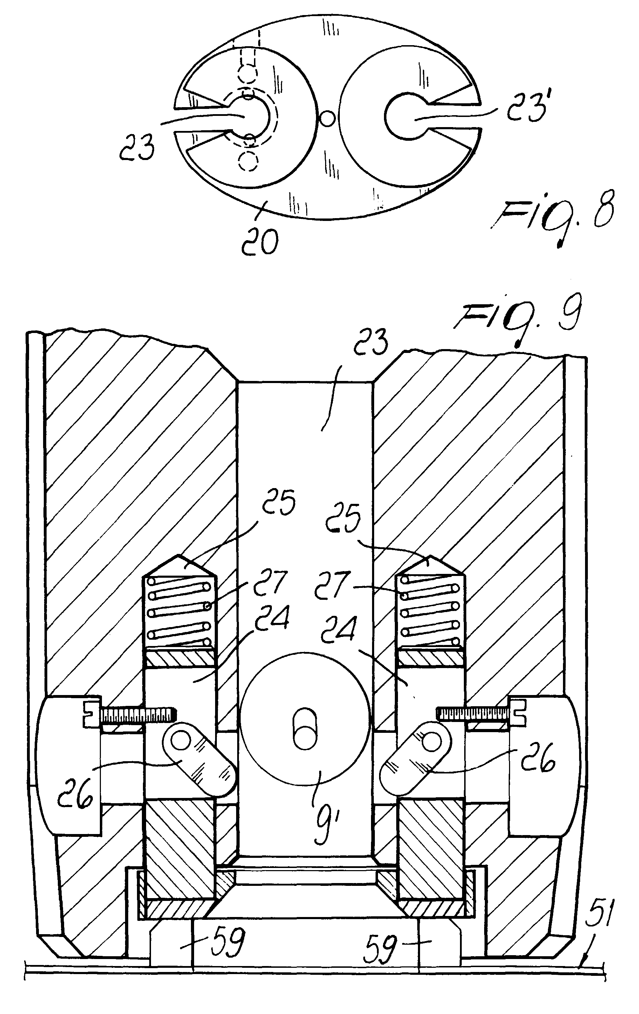

With reference to Figures 4, 7, 8 and 9, the engagement/release means comprise a cylindrical body 20 which has an elliptical transverse cross-section and is meant to be suspended from a helicopter 200 by means of a suspension cable 21. Two tubular channels 23 and 23 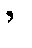 are conveniently provided in said cylindrical body 20, which have a substantially vertical axis and have a lateral opening; two cylinders 24 are associated with each one of the channels 23 and 23 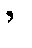 in a symmetrical position with respect to said channels. Said cylinders 24 can slide in corresponding guides 25 formed in the cylindrical body 20 and are provided with stopping means. In particular, said stopping means comprise a stop tab 26 which is pivoted on the surface of each cylinder 24; moreover, inside each guide 25 there is provided a spring 27 which acts on a corresponding cylinder 24 and is suitable to ensure its correct positioning in the guides 25. The sphere 9 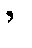 is then initially placed inside one of the two channels, for example the channel 23 as shown in Figure 5, and is engaged in said position by means of the pair of stop tabs associated with channel 23.

After said connection has been performed, the helicopter pilot can set off, flying toward the tower 10 of the line, towing the cable 30, in the direction indicated by the arrow 201.

Once the helicopter has arrived in position, it is positioned vertically above suitable containing means generally designated by the reference numeral 50. The containing means 50 have the particularity of acting as a guide for the cylindrical body 20, so as to facilitate the coupling of the towing cable with the bypass cable 11, and of supporting the coupling means of said bypass cable 11.

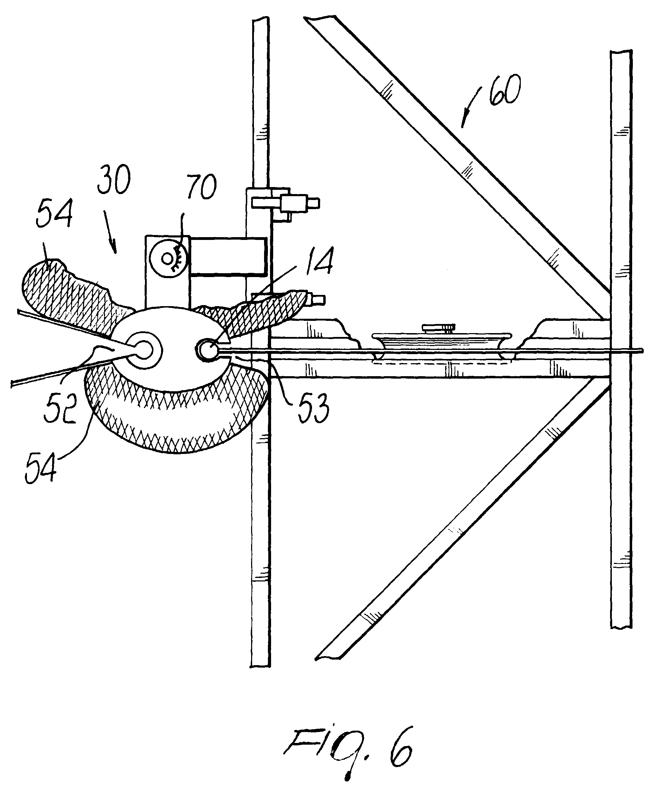

In particular, as shown in Figures 4 and 5, the containing means 50 comprise a basket-shaped element 51 which is fixed to the supporting tower 10 by means of a suitable quick-coupling structure 60, so as to have a substantially vertical axis. A notch 52 and a split 53 are provided on the surface of the basket-shaped element 51, as shown in Figure 6. The notch 52, in particular, has a shape which facilitates the insertion of the sphere 9 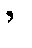 in the receptacle 15, while the split 53 allows the end of the bypass cable 11 to protrude from the basket 51 after the cylindrical body 20 has engaged the sphere 14.

Once the pilot has placed himself vertically above the basket-shaped element 51, he maneuvers in the direction indicated by the arrow 202 so as to insert the cylindrical body 20 inside said basket 51. Advantageously, two guiding wings 54 are fixed to the upper edge of the basket 51; said wings are mutually staggered and have different heights, and their main function is to facilitate the correct insertion of the cylindrical body 20 in the basket 51. At the base of the basket and outside it a graduated scale 70 is provided which, during fixing, indicates the correct positioning of the basket 51 so as to correctly orientate the position of the wings 54 with respect to the approach direction of the helicopter.

Moreover, during descent the coupling between the elliptical transverse cross-section of the cylindrical body 20 and the corresponding walls of the basket 51 prevents relative movements between the two components, ensuring the correct centering of the cylindrical body 20 inside the basket 51.

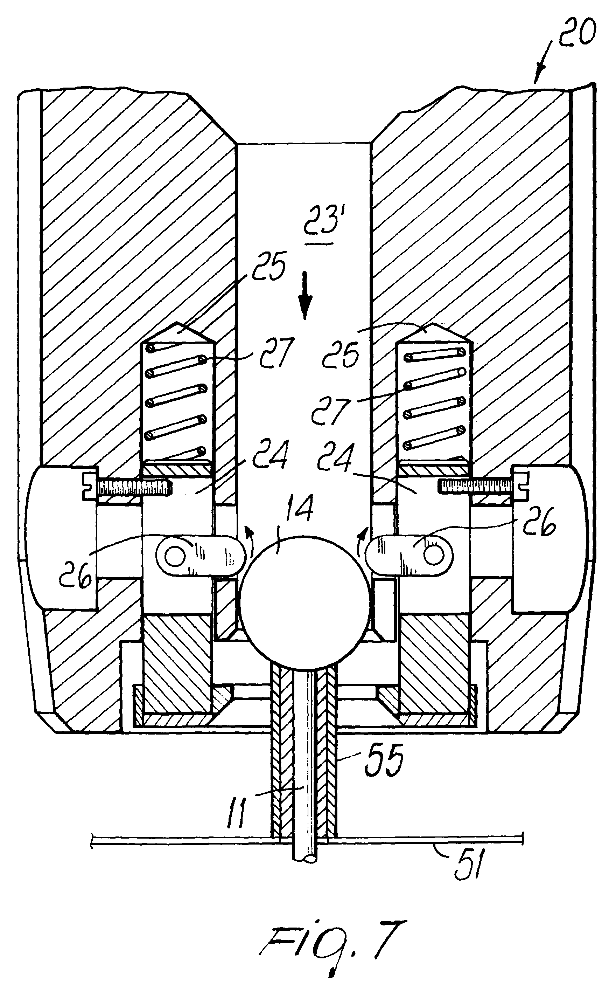

As shown schematically in Figure 7, a tubular support 55 is fixed to the base of the basket-shaped element 51 and inside it and supports the sphere 14 in an optimum position for the engagement of said spherical body inside the empty channel 23 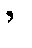 . For this purpose, when the cylindrical body is inserted in the basket 51, the sphere 14 interacts with the pair of tabs 26 associated with the channel 23 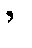 . This interaction causes the upward rotation of the tabs and allows the sphere 14 to slide inside the channel 23 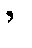 . When the entire sphere has moved beyond the tabs 26, said tabs rotate and return to their initial position and retain the sphere 14, which is thus engaged with the cylindrical body 20. After engagement, the cylindrical body 20 continues its descent toward the bottom of the basket 51, where two disk-like protrusions 59 are provided. Said protrusions 59, as the body 20 approaches the bottom of the basket-shaped element 51, interact with the pair of sliding cylinders 24 associated with the channel 23 which accommodates the sphere 9 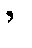 , as shown in Figure 9.

In this way, the two cylinders 24 are made to perform a translatory motion inside the corresponding guides 25; thanks to this movement, the tabs 26 rotate downward, allowing the sphere 9 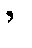 to drop; by sliding along the channel, said sphere passes through the notch 52 and falls into the receptacle 15. Advantageously, as shown in Figure 10, a pawl 19 is pivoted at the opening of the pocket 17 on the receptacle 15 and a left-handed spring 18 is associated therewith. When the pawl 19 makes contact with the sphere 9 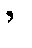 , it turns, facilitating the entry of said sphere in the pocket 17, and loads the spring 18. Once the sphere 9 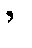 has passed, the spring 18 is released, repositioning the pawl, which acts as a stop element and prevents the escape of the sphere from the pocket. When the sphere 9 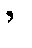 has moved beyond the tabs, the springs 27, by acting on the two cylinders 24, return them to the initial position; during this movement, the associated tabs 26 also return to their initial position.

As shown in Figure 11, the receptacle 15 is maintained in the correct coupling position by means of a suitable supporting tab 56 which is welded to the base of the basket 51 and comprises two retention spheres 57; a corresponding spring 58 is associated with each one of said spheres 57. The spheres 57, under the action of the springs 58, interact against two parallel walls of the receptacle 15, supporting it and keeping it in the intended position.

When the sphere 9 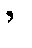 falls into the pocket 17, the weight of the towing cable pulls the receptacle, which by sliding against the spheres 57 causes the compression of the springs 58 and the consequent separation of said receptacle from the basket 51.

At this point, since the towing cable is coupled to the bypass cable 11, the helicopter 200 can lift the cylindrical body 20 again as shown by the arrow 203, the sphere 14 being engaged therewith, and can proceed toward the next tower in the direction indicated by the arrow 204. During this step, the end of the bypass cable 11 protrudes from the basket 51 by means of the split 53 and the towing cable, which now also comprises the coupled bypass cable, is pulled and slides through the pulley. In the gap between one tower and the next, a rotary coupling 205 placed along the suspension cable 21 applies a 180° rotation to the cylindrical body 20; in this way, at the next tower the above-described engagement/release operations can be performed in the same manner, because the two channels 23 and 23' with the respective sliding cylinders 24 and stop tabs 26 work in the same way, alternating in each instance in engaging the bypass cable and releasing the end of the towing cable.

In practice it has been observed that the device and the method according to the present invention allow to fully achieve the intended aim and objects, since they allow to lay the towing cable so as to bypass the supporting towers purely with the aid of the helicopter and without using workers on the towers. The device is further structurally very simple and greatly simplifies the maneuvers of the helicopter during laying and therefore allows to reduce execution times and costs.

It should also be observed that this operation is performed by always engaging the bypass cable first and then releasing the towing cable; in this way it is in fact possible to maintain a continuous connection between the helicopter and the towing cable during laying, preventing any unexpected loss of said towing cable.

The device and the method thus conceived are susceptible of numerous modifications and variations, all of which are within the scope of the inventive concept; all the details may also be replaced with other technically equivalent elements.

In practice, the materials employed, as well as the dimensions, may be any according to requirements and to the state of the art.

## Claims

1. Device for laying a towing cable of an overhead power line on supporting towers by means of a helicopter, characterized in that it comprises:
a bypass cable, an intermediate portion of which is inserted in the race of a pulley which is fixed to a corresponding supporting tower and is connected at its leading and trailing ends to male and female coupling means respectively;
engagement/release means, which are connected to the towing cable and are adapted to facilitate its coupling to the bypass cable, said engagement/release means acting so as to maintain the continuity of the connection between the helicopter and the towing cable;
containing means, which are fixed to said supporting tower with a substantially vertical axis and are meant to guide the engagement/release means and support said male and female coupling means.

2. Device for laying a towing cable according to claim 1, characterized in that said engagement/release means comprise a cylindrical body which has an elliptical transverse cross-section and has two tubular channels, a couple of cylinders being associated with each one of said channels, said cylinders being able to slide in corresponding guides arranged symmetrically with respect to the associated channel and being provided with stopping means.

3. Device for laying a towing cable according to claim 2, characterized in that said stopping means comprise a stop tab pivoted to each one of said cylinders for the engagement/release of the bypass cable and of the towing cable alternately.

4. Device for laying a towing cable according to claim 1, characterized in that said containing means comprise a basket-shaped element which is fixed to the supporting tower and on the surface of which a shaped notch and a split are formed which are respectively suitable to facilitate the insertion of one end of the towing cable in said female coupling means and the protrusion of the bypass cable coupled to the towing cable from the basket-shaped element.

5. Device for laying a towing cable according to claim 4, characterized in that said containing means comprise two guiding wings which are mutually offset and have different heights, said wings being fixed to the upper edge of the basket-shaped element and being suitable to guide the descent of the cylindrical body into the basket-shaped element.

6. Device for laying a towing cable according to claim 4, characterized in that said containing means comprise a tab for supporting said female coupling means, said tab being welded to the basket-shaped element and comprising two spheres, a corresponding retention spring being associated with each one of said spheres, the interaction between said spheres and the female coupling means allowing the correct positioning of said female means with respect to the basket-shaped element.

7. Device for laying a towing cable according to claim 4, characterized in that said containing means comprise a tubular support which is fixed to the base of the basket-shaped element and supports the male coupling means of the bypass cable.

8. Device for laying a towing cable according to claim 4, characterized in that said containing means comprise two disk-like protrusions which are fixed to the base of the basket-shaped element and can interact with said two sliding cylinders for the release of the end of the towing cable.

9. Device for laying a towing cable according to one or more of the preceding claims, characterized in that said male and female coupling means respectively comprise a spherical body which is welded to the bypass cable and a receptacle on the surface of which a shaped pocket is provided which is adapted to accommodate one end of the towing cable.

10. Device for laying a towing cable according to claim 9, characterized in that a stop pawl is pivoted on said receptacle, at the inlet of the shaped pocket, a corresponding safety spring being associated with said pawl, the interaction between said pawl and said spring preventing the escape of the end of the towing cable from the pocket.

11. Device for laying a towing cable according to one or more of the preceding claims, characterized in that a graduated scale is also associated with said containing means and is adapted to indicate, during the fixing of the basket-shaped element, the correct orientation of the wings with respect to the advancement direction of the power line.

12. A method for laying a towing cable of an overhead power line on supporting towers by means of a helicopter, characterized in that it uses a device as in claims from 1 to 11.

13. A method as in claim 12 characterized in that it comprises the following steps:
a) connecting one end of a towing cable to engagement/release means which are connected to a helicopter;
b) maneuvering the helicopter so as to carry the towing cable to the vicinity of containing means which are fixed beforehand to a supporting tower;
c) inserting, by means of a maneuver of the helicopter, the engagement/release means into said containing means;
d) engaging a first end of a bypass cable, which is inserted beforehand in a pulley which is fixed to the tower and whose ends are detachably connected to the containing means;
e) releasing the end of the towing cable into a receptacle which is connected to a second end of the bypass cable;
f) lifting, by means of the helicopter, the engagement/release means connected to the bypass cable, pulling the cable toward a subsequent tower of the line; and
g) repeating steps from b) to f) for each subsequent tower.
